# EUROPEAN PATENT SPECIFICATION

(11) **EP 3 262 323 B1**
(45) Date of publication and mention of the grant of the patent: **08.07.2020**
(21) Application number: 16717458.0
(22) Date of filing: 25.02.2016
(51) Int. Cl.: F16J 15/00, F16J 15/34, F16J 15/38

(54) **MECHANICAL SEAL**
GLEITRINGDICHTUNG
JOINT MÉCANIQUE

(30) Priority: 25.02.2015 IT TO20150132
(43) Date of publication of application: 03.01.2018
(73) Proprietor: Meccanotecnica Umbra S.p.A., 06042 Campello Sul Clitunno (IT)
(72) Inventor: VENTURA, Alessandro, 05100 Terni (IT); FERRI, Luigi Massimiliano, 06042 Campello Sul Clitunno (IT)
(74) Representative: Franzolin, Luigi
(86) International application number: PCT/IB2016/051039
(87) International publication number: WO 2016/135670

(56) References cited:
- EP-A1- 1 916 509
- DE-A1- 4 441 474
- GB-A- 1 335 642
- JP-A- 2009 174 376
- JP-U- S6 097 400

## Description

### TECHNICAL FIELD

The present invention relates to a mechanical seal, and particularly to a mechanical seal configured to be interposed between a rotating shaft and an aperture through which the shaft extends. The present invention finds a preferred application, although not exclusive, in the seals of rotary pumps and in particular in the recirculation pumps of cooling fluid in engines of motor vehicles, hereinafter for brevity indicated as "water pump".

### BACKGROUND ART

As is known, the water pump of a motor vehicle comprises a pump body, a drive shaft and a rotor housed in the pump body and fitted to the shaft. The latter is driven by a pulley and is extends through an aperture of the pump body, in which it is supported by means of a bearing.

The seal between the shaft and the pump body is normally made by means of a mechanical seal fitted on the shaft in the area axially comprised between the rotor of the pump and the bearing of the shaft.

The mechanical seal comprises a first sealing ring rotationally fixed constrained to the pump body, and a second sealing ring mounted integral with the shaft and rotatable therewith. The two sealing rings cooperate with each other axially under the elastic load exerted by a spring and thereby form a creeping front seal.

In order to ensure a correct operation of the seal, in the contact zone between the two sealing rings the presence of a fluid flow-path suitable to prevent premature wear, unwanted noise and overheating must be ensured. A small amount of loss, called "micro leaks" or "cosmetic losses", may therefore be present in the seals of this type.

The amount of loss is a function of the contact pressure between the two sealing rings, which is in turn conditioned by the materials used.

Such losses, even though completely harmless, may be visible to the user, for example in the form of stains visible below the vehicle after a stop, or in the case of inspection of the engine during maintenance. This may lead to a false indication of failure of the pump and its replacement even in cases in which it is in perfect efficiency. Analysis performed, revealed that more than 50% of replacements are due to this cause.

To solve the above problem, it is known of to provide a collection sump provided with an overflow hole for the leaks in the pump. A first problem associated with this solution is represented by the cost of the additional components for making the sump and related production equipment.

In addition, the liquid in the collection sump has a small free surface exposed to air, and thus the evaporation is very weak. As a result, consecutive accumulations can result in an overflow of the liquid from the overflow hole and thus be visible anyway.

JP 2009 174376 A discloses a mechanical seal interposed between a rotating shaft and a fixed body provided with an aperture through which the shaft extends. The seal comprises a fixed part including a first sealing ring constrained to the fixed body and a rotating part comprising a second sealing ring sealingly constrained to the shaft. The sealing rings contact one another frontally under an axial thrust.

The seal includes a secondary sealing element carried by the fixed part and contacting the rotating shaft.

DE 44 41 474 A1 discloses a mechanical seal wherein a first fixed sealing ring carries an absorbing material element formed by an annular ring made of bristles extending towards and contacting a rotatable bushing.

EP 1 916 509 A1 discloses a mechanical seal configured to be interposed between a rotating shaft and a fixed body provided with an aperture through which the shaft extends, the seal comprising a fixed part including a first sealing ring designed to be sealingly constrained to the fixed body, and a rotating part comprising a second sealing ring sealingly constrained to the shaft, the sealing rings contacting one another frontally under an axial thrust, the seal further comprising an absorbing material element for absorbing possible leaks from the mechanical seal, the absorbing material element being constituted by a ring carried by a radial lip seal and configured so as to be positioned, in use, in or close to the aperture without contacting the shaft.

### DISCLOSURE OF INVENTION

The object of the invention is therefore to provide an improved seal that is free of the drawbacks related to the known seals.

Said purpose is achieved by a seal according to claim 1.

According to the present invention, an absorbing material element with such characteristics as to easily absorb and evaporate the liquid is applied to the fixed part of the seal, via a mechanical coupling of any type, gluing or other fastening system.

The absorbing material may be either integrated in the mechanical seal, or be an accessory applicable to existing seals.

### BRIEF DESCRIPTION OF THE DRAWINGS

For a better understanding of the present invention, some preferred embodiments will be described below by way of non-limiting examples and with reference to the appended drawings, wherein:
figure 1 is an axial cross-section of a seal according to a first embodiment of the present invention;
figure 2 is an axial cross-section of a second embodiment of the present invention; and
figure 3 is a schematic axial cross-section of a third embodiment of the present invention.

### BEST MODE FOR CARRYING OUT THE INVENTION

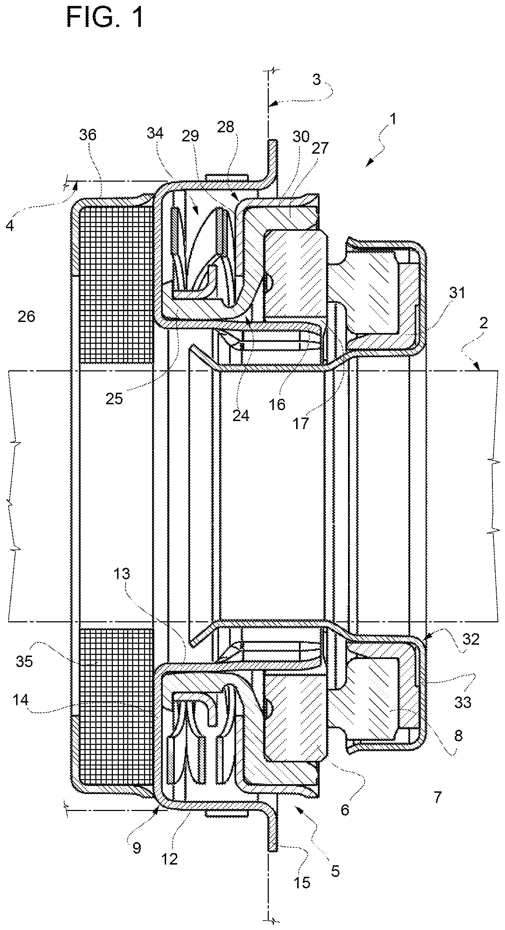

With reference to figure 1, reference numeral 1 globally denotes a mechanical seal configured to be interposed between a rotating shaft 2 and a fixed body 3 provided with an aperture 4 through which the shaft 2 extends. By way of example, the shaft 2 and the body 3 may consist of the shaft and the body of a water pump of a motor vehicle (not illustrated).

The seal 1 comprises, in a known manner, a fixed part 5 comprising a first sealing ring 6 constrained to the pump body 3, and a rotating part 7 comprising a second sealing ring 8 integrally mounted to the shaft 2 and rotating with it. The two sealing rings 6, 8 cooperate with each other axially and form a creeping front seal.

The sealing rings 6, 8 are suitably made of ceramic material, for example silicon carbide, and may for example be made using the method described in WO2007/057934.

The seal 1 comprises a cup-shaped element 9, made of sheet metal by deep drawing and having a C-shaped radial cross-section open towards the sealing rings 6, 8. The cup-shaped element 9 comprises a cylindrical outer wall 12, a substantially cylindrical inner wall 13 and a flat bottom wall 14. The outer wall 12, provided with an annular flange 15 on the outer radial end, is set inside the aperture 6 of the pump body 3; the flange 15, in axial abutment with the pump body 3, determines the axial positioning of the seal 1 with respect to it.

The inner wall 13 surrounds the shaft 2 with a certain radial clearance.

The first sealing ring 6 is constrained to an end portion 16 of the inner wall 13 of the cup-shaped element 10 by means of a splined coupling 17 with clearance which allows the relative axial free sliding and a limited freedom of relative rotation.

The first sealing ring 6 is also sealingly constrained to the cup-shaped element 9 by means of a bellows 24 of elastomeric material, which has one end 25 of a smaller diameter constrained to the inner wall 13 of the cup-shaped element 10 by means of a locking ring 26 and an opposite end 27, of greater diameter, which is sealingly interposed between the first sealing ring 6 and a metallic ring 28 which surrounds and encloses it partially. More in particular, the ring 28 has a substantially L-shaped cross-section, with a radial flat wall 29 and an outer cylindrical wall 30.

The second sealing ring 8 is mounted with the interposition of a ring 31 of elastomeric material on a sleeve 32 set on the shaft 2 and extending partially inside the inner wall 13 of the cup-shaped element 10.

The sleeve 32 integrally forms an annular flange 33 with a profiled end, housing the second sealing ring 8, prismatically coupled to it and having an axial stop function.

The mechanical seal 1 also comprises a spring 34 housed in the cup-shaped element 9 and compressed between the bottom wall 14 of the latter and the wall 29 of the metal ring 28, so as to push the first sealing ring 6 against the second sealing ring 8 with a predetermined work load.

In the example illustrated, the spring 34 is a helical wave spring made of a flat band, such as the springs marketed under the name Crest-to-Crest® by Smalley. Alternatively, the spring 34 could be replaced by an annular wave spring or by a conventional helical spring or a plurality of annular springs (Belleville or wave type) stacked on each other.

According to the present invention, the cup-shaped element 9 is applied to an absorbing material element 35 having the purpose of collecting the micro-leaks which may seep between the two sealing rings 6 and 8 and reach the aperture 4, where the support bearing of the shaft 2 is housed (not shown).

The element 35 has advantageously the form of a ring (hereinafter, for brevity, the "ring 35"), it is housed in the aperture 4, and can be fixed in any way to the cup-shaped element 9. For example, it can be partially housed in a housing 36 arranged to leave exposed at least a part of its surface to allow the elimination of the leaks by evaporation.

In the example in Figure 1, the housing 36 is composed of an annular casing which encloses an outer annular portion of the ring 35 and is welded, for example by means of a plurality of welding points equally spaced along its circumference, to the bottom wall 14 of the cup-shaped element 9.

The absorbing material may be of any type: it can for example be a non-woven fabric, a porous solid material such as a low density ceramic, or made from powders of any type (carbonaceous, limestone, silica, etc.), gels of any type, salts (sodium or other).

One important property of the material is to absorb and diffuse the liquid through its structure, so as to avoid the permanence of liquid in the first contact area and facilitate the subsequent evaporation.

A preferred embodiment of the absorbent material is a tufted mixed wool/viscose felt with a weight of 0.160 km/m² for each mm of thickness and a temperature resistance up to at least 100°C.

The functioning of the seal 1 is as follows. In use, the first sealing ring 6 is fixed, while the second sealing ring 8 rotates integrally with the shaft 2. Between the two rings 6, 8 a rotational movement therefore occurs with relative sliding under the load of the spring 32.

Should micro-leaks occur between the two sealing rings 6, 8 they tend to flow towards the aperture 4 and are intercepted by the absorbing ring 35, in which they are diffused and subsequently eliminated by evaporation.

Such micro leaks are thus prevented from being visible to the user.

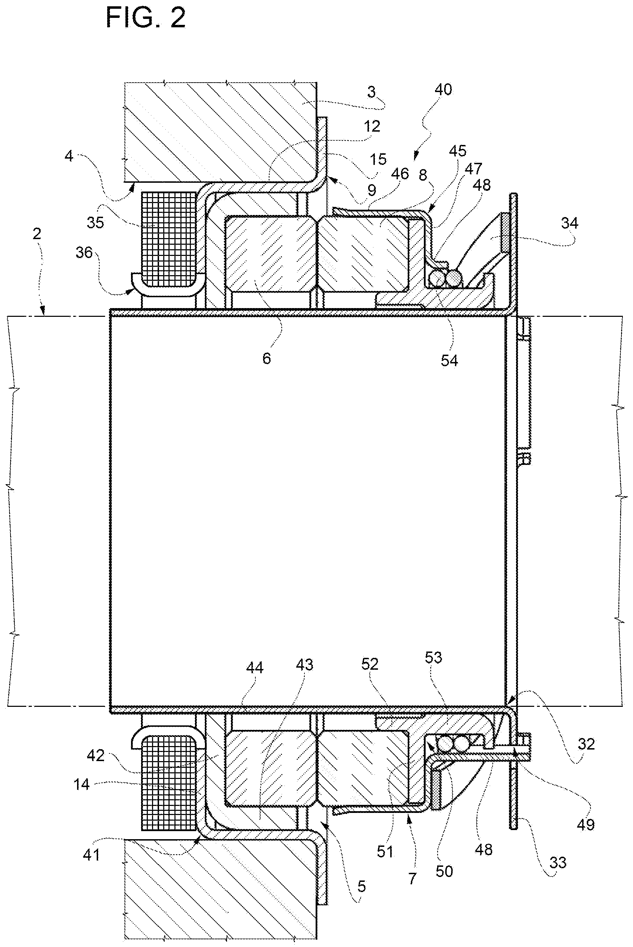

Figure 2 shows a second embodiment of a seal according to the present invention, globally denoted by reference numeral 40, which is described below insofar as it differs from the seal 1 described, using the same reference numbers to indicate parts identical or corresponding to parts already described.

The seal 40 differs from the seal 1 essentially in that the spring 34 is carried by the rotating part of the seal 7, rather than by the fixed part 5.

Therefore, the fixed part 5 is simplified, with the result that the dimensions of the seal in the radial direction can be reduced, making it possible to install in areas with a reduced diameter.

More precisely, the cup-shaped element 9 of the seal 40 is free of the inner wall 13 and therefore comprises a cylindrical wall 12 from the opposite ends of which an annular wall 14 and a flange 15 extend radially, respectively towards the inside and towards the outside and which resting against the pump body 3 determine the axial positioning of the seal 1 with respect to it.

The cylindrical wall 12 is set inside the aperture 4 of the pump body 3, which has a reduced diameter, for example of 20 mm.

The first sealing ring 6 is sealingly mounted(static) in the cup-shaped element 9, and blocked therein by a hood 41 of elastomeric material, which is substantially cup-shaped and has an annular flat wall 42 axially interposed between the flat wall 14 of the cup-shaped element 9 and the first sealing ring 6, and a cylindrical outer wall 43 extending axially projecting from the annular wall 42 and radially compressed between the first sealing ring 6 and the cylindrical wall 12 of the cup-shaped element 9.

The sleeve 32 comprises a tubular portion 44 passing through the cup-shaped element 9 and the sealing rings 6, 8 and suitable to be set on the shaft 2, and a flat radial end flange 33 arranged on the side of the second sealing ring 8.

The second sealing ring 8 is also housed inside a metal ring 45 which has a substantially L-shaped cross-section and comprises a cylindrical wall 46 inside which the second sealing ring 8 is mounted with radial interference and a radial flat wall 47 extending inwardly from one end of the cylindrical wall 46 facing towards the flange 33.

The wall 47 ends on the inside with an edge 48 folded axially towards the flange 19 from which a plurality of axial tabs 48 extend which engage with clearance respective apertures 49 in the flange 33, in order to prismatically constrain the ring 45 to the sleeve 32.

The seal 40 further comprises an elastomeric element 50 which is sealingly mounted so as to slide on the tubular portion 43 of the sleeve 32. The elastomeric element 50 comprises a radial intermediate wall 51, which is axially compressed between the second sealing ring 8 and the wall 46 of the ring 44 and forms the static seal between the second sealing ring 8 and the ring 44. The axial forcing is maintained thanks to the radial interference between the second sealing ring 8 and the cylindrical wall 46 of the ring 45. The elastomeric element 50 further comprises a first annular portion 52 extending axially from the intermediate wall 51 inside the second sealing ring 8, and a second annular portion 53 extending towards the flange 33 and in radial contact with the tubular portion 44 of the sleeve 32, with a coupling such as to create a static seal but rotationally and axially free.

Such coupling is preferably realized by means of a cylindrical wire helical spring 54 fitted around the second annular portion 53 and exerting on the same a radial load sufficient to achieve the static seal but insufficient to achieve a locking in the rotational and axial direction.

Conveniently, the spring 54 consists of a helical spring with a small number of coils, preferably less than three, and a reduced pitch between the coils, preferably less than double the diameter of the wire. In the example illustrated, the spring 30 has two coils packed together, and is housed between the second annular portion 53 and the edge 47 the ring 44.

The mechanical seal 1 lastly comprises a spring 34 compressed between the flange 33 of the sleeve 32 and the wall 47 of the ring 45, so as to axially push the second sealing ring 8 against the first sealing ring 6 with a predetermined work load.

In the example illustrated the spring 34 is an annular wave spring made by shearing a flat tape.

Conveniently, the annular wall 42 of the hood 41 cooperates in sliding with the tubular portion 44 of the sleeve 32, so as to define a sort of dust lip suitable to protect the seal 1 from external contamination.

According to the present invention, the cup-shaped element 9 is applied to an absorbing material ring 35 having the purpose of collecting the micro-leaks which may seep between the two sealing rings 6 and 8 and reach the aperture 4, where the support bearing of the shaft 2 is housed (not shown). In this embodiment, the housing 36 is composed of a plurality of clips made entirely by the cup-shaped element 9 and folded to hook around an inner edge of the ring 35 so as to keep it in contact with the flat wall 14 of the cup-shaped element itself.

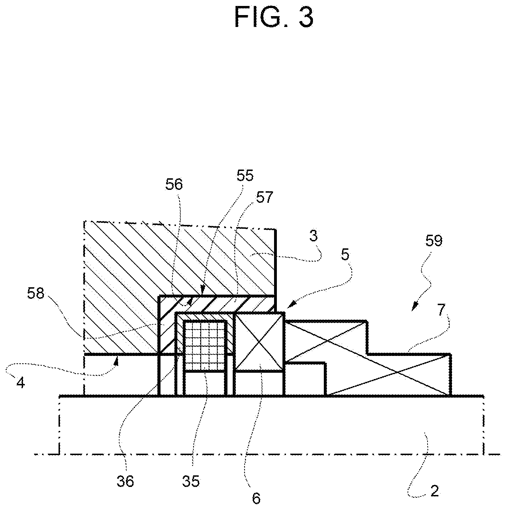

Figure 3 shows a third embodiment of the invention, particularly for industrial applications. In this embodiment, globally denoted by reference numeral 59, the fixed part 5 comprises a hood 55 of elastomeric material housed in a seat 56 of the pump body 3 defined by the aperture 4. The hood 55 comprises a cylindrical wall 57 mounted with radial interference inside the seat 56, and a annular wall 58 placed in axial abutment against a shoulder 59 defined by said seat 56.

Inside the hood 55 are housed the fixed sealing ring 6 and a ring 35 of absorbing material, conveniently housed inside a housing 36. The sealing ring 6 is mounted inside the cylindrical wall 57 with radial interference, so as to ensure the static seal between the sealing ring 6 and the pump body 3. The ring 35 of absorbing material is axially housed between the sealing ring 6 and the flat annular wall 58 of the hood 55.

Only the dimensions of the rotating part 7 of the seal 59 are shown schematically.

In this case too, any micro-leaks leaking between the fixed sealing ring 6 and the corresponding rotating sealing ring (not shown) of the rotating part 7 are retained by the ring 35 of absorbing material.

Lastly, it is clear that further variations may be made to the seals 1, 40, 59 while remaining within the scope of the claims. In particular, the element 35 of absorbing material can be fixed in any way to the fixed part 5 of the seal.

## Claims

1. A mechanical seal (1; 40; 59) configured to be interposed between a rotating shaft (2) and a fixed body (3) provided with an aperture (4) through which the shaft (2) extends, said seal (1) comprising a fixed part (5) including a first sealing ring (6) designed to be sealingly constrained to said fixed body (3), and a rotating part (7) comprising a second sealing ring (8) sealingly constrained to said shaft (2), said sealing rings (6, 8) contacting one another frontally under an axial thrust, the seal further comprising an absorbing material element (35) for absorbing possible leaks from said seal (1; 40; 59), said absorbing material element (35) being constituted by a ring carried by said fixed part (5) and configured so as to be positioned, in use, in or close to said aperture (4) without contacting the rotating part (7) or the shaft (2).

2. A seal as claimed in claim 1, **characterized in that** said absorbing material is a non-woven fabric.

3. A seal as claimed in claim 2, **characterized in that** said non-woven fabric is a felt.

4. A seal as claimed in claim 3, **characterized in that** said felt is wool and viscose based.

5. A seal as claimed in claim 1, **characterized in that** said absorbing material is a porous solid.

6. A seal as claimed in claim 1, **characterized in that** said absorbing material is selected in the group comprising powders, gels and salts.

7. A seal as claimed in any of the preceding claims, **characterized by** including a housing (36) for the absorbing material secured to said fixed part (5).

8. A seal as claimed in any of the preceding claims, **characterized in that** said fixed part (5) includes a cup-shaped element (9) configured to be mounted into said aperture (4), said first sealing ring (6) being sealingly constrained to said cup-shaped element (9).

9. A seal as claimed in claim 8, **characterized in that** said housing (36) is welded to said cup-shaped element (9).

10. Seal as claimed in claim 8, **characterized in that** said housing (36) is formed by a plurality of elements integral with said cup-shaped element (9).

11. A seal as claimed in any of claims 1 to 7, **characterized in that** said absorbing material element (35) and said first sealing ring (6) are housed in a common housing member (55) configured to be accommodated in a seat (56) of said body (3) .

12. A seal as claimed in claim 11, **characterized in that** said housing member is an elastomeric material hood (55).

## Patentansprüche

1. Mechanische Dichtung (1; 40; 59), die so konfiguriert ist, dass sie zwischen einer rotierenden Welle (2) und einem feststehenden Körper (3), der mit einer Öffnung (4) versehen ist, durch die sich die Welle (2) erstreckt, angeordnet werden kann, wobei die Dichtung (1) einen feststehenden Teil (5) mit einem ersten Dichtungsring (6) aufweist, der so gestaltet ist, dass er abdichtend an dem feststehenden Körper (3) gehalten werden kann, und einen rotierenden Teil (7) mit einem zweiten Dichtungsring (8) aufweist, der abdichtend an der Welle (2) gehalten ist, wobei die Dichtungsringe (6, 8) einander unter einem axialen Schub frontal berühren, wobei die Dichtung ferner ein Element (35) aus absorbierendem Material zum Absorbieren möglicher Leckagen aus der Dichtung aufweist (1; 40; 59), wobei das Element (35) aus absorbierendem Material durch einen Ring gebildet wird, der von dem feststehenden Teil (5) getragen wird und so gestaltet ist, dass er im Gebrauch in oder nahe der Öffnung (4) positioniert ist, ohne den rotierenden Teil (7) oder die Welle (2) zu berühren.

2. Dichtung nach Anspruch 1, **dadurch gekennzeichnet, dass** das absorbierende Material ein nicht gewebter Stoff ist.

3. Dichtung nach Anspruch 2, **dadurch gekennzeichnet, dass** der nicht gewebte Stoff ein Filz ist.

4. Dichtung nach Anspruch 3, **dadurch gekennzeichnet, dass** der Filz auf Wolle und Viskose basiert.

5. Dichtung nach Anspruch 1, **dadurch gekennzeichnet, dass** das absorbierende Material ein poröser Feststoff ist.

6. Dichtung nach Anspruch 1, **dadurch gekennzeichnet, dass** das absorbierende Material aus der Gruppe ausgewählt ist, die Pulver, Gele und Salze aufweist.

7. Dichtung nach einem der vorstehenden Ansprüche, **dadurch gekennzeichnet, dass** sie ein Gehäuse (36) für das absorbierende Material umfasst, das an dem feststehenden Teil (5) befestigt ist.

8. Dichtung nach einem der vorstehenden Ansprüche, **dadurch gekennzeichnet, dass** der feststehende Teil (5) ein becherförmiges Element (9) umfasst, das so konfiguriert ist, dass es in die Öffnung (4) montiert werden kann, wobei der erste Dichtungsring (6) abdichtend an dem becherförmigen Element (9) gehalten ist.

9. Dichtung nach Anspruch 8, **dadurch gekennzeichnet, dass** das Gehäuse (36) an das becherförmige Element (9) geschweißt ist.

10. Dichtung nach Anspruch 8, **dadurch gekennzeichnet, dass** das Gehäuse (36) durch eine Vielzahl von Elementen gebildet wird, die einstückig mit dem becherförmigen Element (9) ausgebildet sind.

11. Dichtung nach einem der Ansprüche 1 bis 7, **dadurch gekennzeichnet, dass** das Element (35) aus absorbierendem Material und der erste Dichtungsring (6) in einem gemeinsamen Gehäuseelement (55) untergebracht sind, das so konfiguriert ist, dass es in einem Sitz (56) des Körpers (3) aufgenommen werden kann.

12. Dichtung nach Anspruch 11, **dadurch gekennzeichnet, dass** das Gehäuseelement eine Haube (55) aus Elastomermaterial ist.

## Revendications

1. Garniture mécanique (1 ; 40 ; 59) configurée pour être interposée entre un arbre rotatif (2) et un corps fixe (3) muni d'une ouverture (4) au travers de laquelle l'arbre (2) s'étend, ladite garniture (1) comprenant une partie fixe (5) incluant une première bague d'étanchéité (6) destinée à être contrainte hermétiquement audit corps fixe (3), et une partie rotative (7) comprenant une deuxième bague d'étanchéité (8) contrainte hermétiquement audit arbre (2), lesdites bagues d'étanchéité (6, 8) étant en contact l'une avec l'autre frontalement sous une poussée axiale, la garniture comprenant en outre un élément en matériau absorbant (35) pour absorber des fuites possibles provenant de ladite garniture (1; 40; 59), ledit élément en matériau absorbant (35) étant constitué par une bague portée par ladite partie fixe (5) et configurée de manière à être positionnée, à l'usage, dans ou à proximité de ladite ouverture (4) sans rentrer en contact avec la partie rotative (7) ou l'arbre (2) .

2. Garniture selon la revendication 1, **caractérisée en ce que** ledit matériau absorbant est un tissu non-tissé.

3. Garniture selon la revendication 2, **caractérisé en ce que** ledit tissu non-tissé est un feutre.

4. Garniture selon la revendication 3, **caractérisée en ce que** ledit feutre est à base de laine et de viscose.

5. Garniture selon la revendication 1, **caractérisée en ce que** ledit matériau absorbant est un solide poreux.

6. Garniture selon la revendication 1, **caractérisée en ce que** ledit matériau absorbant est choisi dans le groupe comprenant les poudres, les gels et les sels.

7. Garniture selon l'une quelconque des revendications précédentes, **caractérisée en ce qu'**elle inclut un boîtier (36) pour le matériau absorbant attaché à ladite partie fixe (5) .

8. Garniture selon l'une quelconque des revendications précédentes, **caractérisée en ce que** ladite partie fixe (5) inclut un élément en forme de coupe (9) configuré pour être monté dans ladite ouverture (4), ladite première bague d'étanchéité (6) étant contrainte hermétiquement audit élément en forme de coupe (9).

9. Garniture selon la revendication 8, **caractérisée en ce que** ledit boîtier (36) est soudé audit élément en forme de coupe (9).

10. Garniture selon la revendication 8, **caractérisée en ce que** ledit boîtier (36) est formé par une pluralité d'éléments faisant partie intégrante dudit élément en forme de coupe (9).

11. Garniture selon l'une quelconque des revendications 1 à 7, **caractérisée en ce que** ledit élément en matériau absorbant (35) et ladite première bague d'étanchéité (6) sont logés dans un élément boîtier commun (55) configuré pour être logé dans un siège (56) dudit corps (3).

12. Garniture selon la revendication 11, **caractérisée en ce que** ledit élément boîtier est un capot en matériau élastomère (55).
